# FASCICULE DE BREVET EUROPEEN

(11) **EP 3 425 227 B1**
(45) Date de publication et mention de la délivrance du brevet: **05.08.2026**
(21) Numéro de dépôt: 17179985.1
(22) Date de dépôt: 06.07.2017
(51) Int. Cl.: G04B 19/00, F16D 3/04, F16D 3/12, F16D 3/00

(54) **MÉCANISME HORLOGER**
UHRWERK
CLOCK MECHANISM

(43) Date de publication de la demande: 09.01.2019
(73) Titulaire: ROLEX SA, 1211 Genève 26 (CH)
(72) Inventeur: FRACHEBOUD, Blaise, CH-1228 Plan-les-ouates (CH); ZBYLUT, Ludovic, F-74330 Poisy (FR)
(74) Mandataire: Moinas & Savoye SARL

(56) Documents cités:
- EP-A1- 2 189 675
- EP-A1- 2 275 883
- JP-A- H0 221 029
- KR-Y1- 200 312 180
- US-A- 2 491 453
- US-A- 5 018 118

## Description

L'invention concerne un mécanisme horloger. L'invention concerne encore un mouvement horloger comprenant un tel mécanisme. L'invention concerne également une pièce d'horlogerie comprenant un tel mécanisme ou un tel mouvement.

Des mouvements d'horlogerie modulaires sont connus de l'art antérieur.

Le document EP2085833 divulgue un mouvement doté de modules interchangeables et positionnables au gré de la disposition des affichages de la montre-bracelet auquel prend part ledit mouvement. Différentes variantes d'un même mouvement peuvent ainsi être obtenues en modifiant le positionnement relatif de l'un ou l'autre des modules relativement à une platine de base qui comporte une pluralité d'orifices de positionnement de chacun des modules. La différenciation des différentes variantes du mouvement s'effectue ainsi dès l'assemblage du mouvement, en particulier dès l'assemblage des modules sur le reste du mouvement.

Le document EP2442191 divulgue également un mouvement doté de modules interchangeables et positionnables au gré de la disposition des affichages de la montre-bracelet auquel prend part ledit mouvement. Différentes variantes d'un même mouvement peuvent ainsi être obtenues en modifiant le positionnement relatif de l'un ou l'autre des modules relativement à un support intermédiaire fixé sur une platine, qui comporte une pluralité d'orifices de positionnement de chacun des modules. La différenciation des différentes variantes du mouvement s'effectue ainsi dès l'assemblage du mouvement, en particulier dès l'assemblage des modules sur le reste du mouvement.

De telles constructions peuvent être problématiques s'il est souhaité moduler la disposition d'un organe d'affichage particulier de la pièce d'horlogerie une fois le mouvement de base assemblé, car cela nécessite un repositionnement complet d'au moins un module relativement à la platine ou au support intermédiaire. Par ailleurs, la précision d'assemblage des différents mobiles prenant part à de tels mouvements peut être difficile à garantir du fait du grand nombre d'ébauches intermédiaires requises pour la mise en œuvre de chacun des modules. Ainsi, de telles solutions ne sont pas satisfaisantes.

Le document EP2275883 divulgue un dispositif de transmission de mouvement de rotation homocinétique entre une première tige d'un mouvement horloger et une deuxième tige d'une boîte de montre, dont les axes de rotation sont sensiblement parallèles. Un tel dispositif comporte notamment un organe de liaison disposé à l'interface des axes de rotation des deux tiges, qui se présente sous la forme d'un joint d'Oldham. Un tel organe comporte deux coulisses respectivement disposées sur deux plans distincts qui sont sensiblement perpendiculaires aux axes de rotation respectifs des deux tiges. Une telle réalisation n'est pas envisageable pour certaines applications.

Le but de l'invention est de fournir un mécanisme horloger permettant de remédier aux inconvénients mentionnés précédemment et d'améliorer les dispositifs connus de l'art antérieur. En particulier, l'invention propose un mécanisme horloger permettant une transmission de mouvement précise et homocinétique ou sensiblement homocinétique. L'invention propose enfin un mécanisme compact et particulièrement adapté à un mouvement horloger

Selon l'invention, un mécanisme horloger est défini par la revendication 1.

Différents modes de réalisation du mécanisme horloger sont définis par les revendications 2 à 11.

Selon l'invention, un mouvement horloger est défini par la revendication 12.

Selon l'invention, une pièce d'horlogerie est définie par la revendication 13.

Les figures annexées représentent, à titre d'exemples, quatre modes de réalisation d'une pièce d'horlogerie permettant de mieux comprendre l'invention telle que définie dans la revendication 1 annexée.

Les figures 1 à 11 illustrent un premier mode de réalisation d'un mécanisme proche de l'invention telle que revendiquée, comprenant un premier mode de réalisation de joint de transmission.

Les figures 12 à 17 illustrent un mode de réalisation d'un mécanisme horloger selon l'invention telle que revendiquée, comprenant une première variante ou une deuxième variante d'un deuxième mode de réalisation de joint de transmission.

Les figures 18 à 20 illustrent une troisième variante du mode de réalisation du mécanisme selon l'invention telle que revendiquée.

Les figures 21 et 22 illustrent une quatrième variante du mode de réalisation de joint de transmission, selon l'invention telle que revendiquée.

Les figures 23 à 26 illustrent un troisième mode de réalisation d'une pièce d'horlogerie, proche de l'invention telle que revendiquée.

Les figures 27 à 31 illustrent un quatrième mode de réalisation d'une pièce d'horlogerie, proche de l'invention telle que revendiquée.

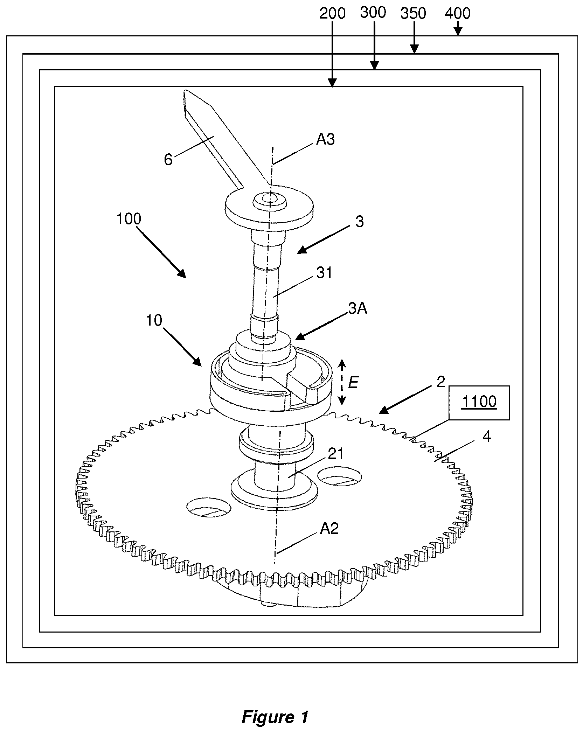

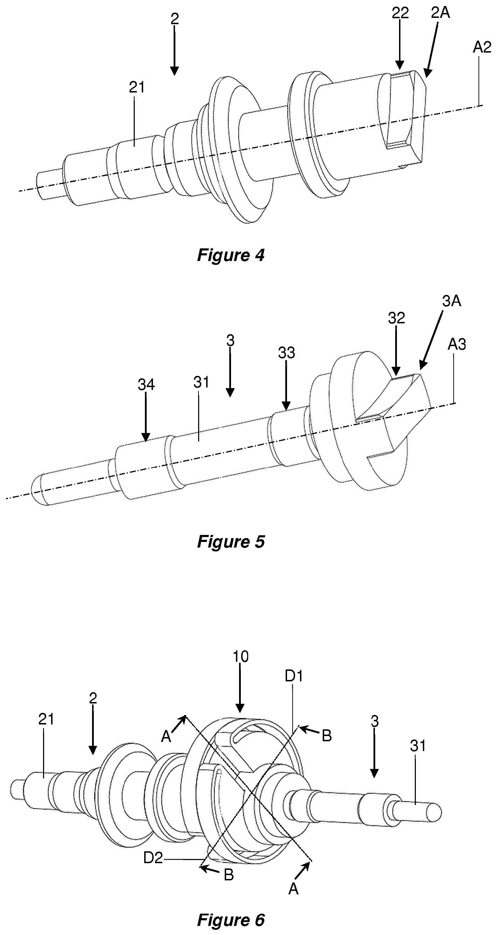

Un premier mode de réalisation d'une pièce d'horlogerie 400 est décrit ci-après en référence aux figures 1 à 11. La pièce d'horlogerie est par exemple une montre, en particulier une montre bracelet. La pièce d'horlogerie comprend une boîte 350 de montre et un mouvement horloger 300 monté dans la boîte de montre. Le mouvement peut être du type mécanique. Il peut être en particulier du type automatique. Alternativement, le mouvement peut être du type électronique.

Le mouvement comprend un mécanisme de transmission de mouvement 200 ou la boîte de montre comprend un mécanisme de transmission de mouvement ou la pièce d'horlogerie comprend un mécanisme de transmission de mouvement à l'interface boîte de montre - mouvement.

Le mécanisme de transmission de mouvement comprend, par exemple, outre un joint de transmission 100, un rouage d'une chaîne 1100 de transmission et un organe d'affichage 6. Ainsi, l'organe d'affichage peut par exemple afficher ou indiquer une information horaire ou dérivée de l'heure. L'organe d'affichage peut comprendre une aiguille 6, notamment une aiguille indiquant l'information horaire ou dérivée de l'heure en coopération avec un limbe et/ou des index disposés sur un cadran. Le rouage d'une chaîne de transmission peut être un rouage de finissage assurant la liaison entre un organe moteur comme un barillet et un organe régulateur comme un oscillateur de type balancier-spiral. Alternativement, la chaîne 1100 de transmission peut par exemple se présenter sous la forme d'une chaîne de comptage de chronographe. Le mécanisme peut encore inclure un module horloger, par exemple un module de chronographe, entre le rouage de finissage et le joint de transmission.

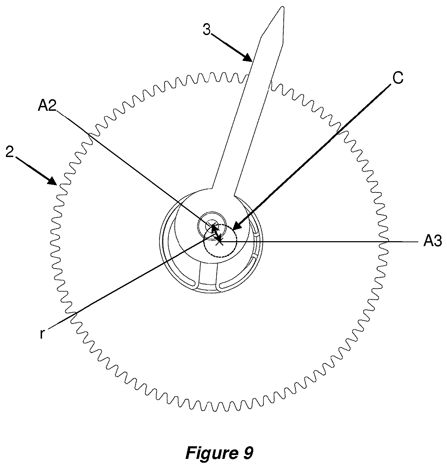

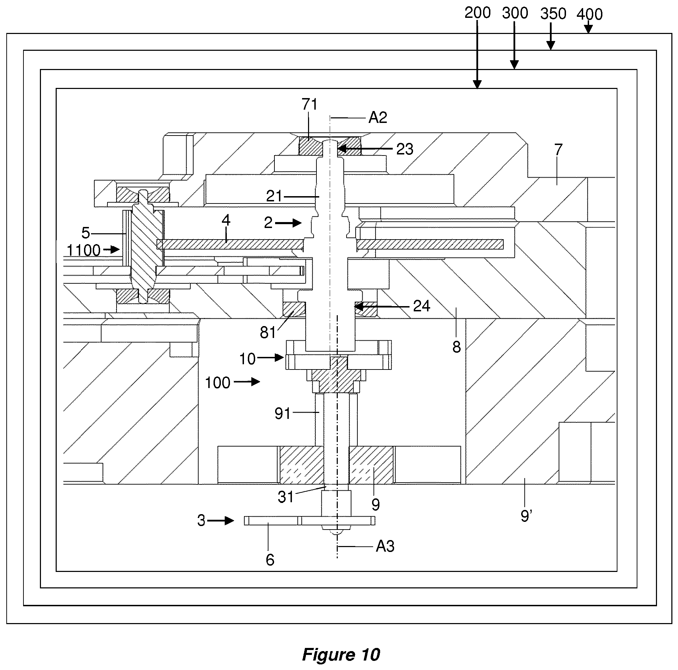

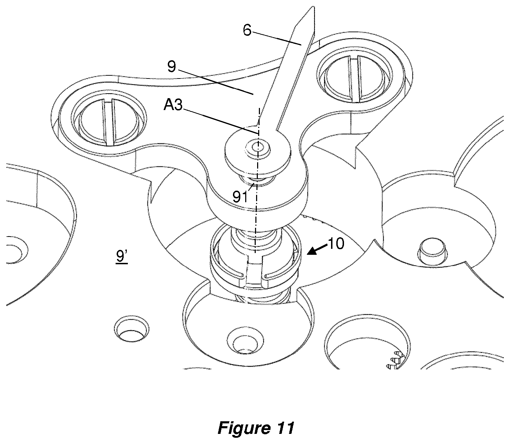

Comme représenté sur les figures 1, 10 et 11, le mouvement d'horlogerie peut être modulaire. Le joint 100 permet ici de relier un mobile 2 de chronographe à un mobile 3 d'affichage d'une indication fournie par ledit mobile 2 de chronographe. Le mobile 2 fait partie intégrante d'une chaîne 1100 de comptage de chronographe. Celui-ci comporte une roue 4 rapportée sur un arbre 21 et qui est liée cinématiquement à un pignon 5 de la chaîne 1100 de comptage du chronographe, comme représenté sur la figure 10. Le mobile 3 comprend l'organe d'affichage 6 qui est rapporté sur un arbre 31. L'arbre 21 comporte des éléments de pivotement 23, 24, notamment des portées cylindriques 23, 24, aptes à coopérer avec des paliers 71, 81, notamment des pierres 71, 81, rapportés respectivement sur des ébauches 7, 8 du mouvement de façon à guider l'arbre 21 en rotation autour de son axe A2. L'arbre 31 comporte également des éléments de pivotement 33, 34, notamment des portées cylindriques 33, 34, aptes à coopérer avec un palier 91, notamment un tube 91, rapporté sur une ébauche 9 du mouvement de façon à guider l'arbre 31 en rotation autour de son axe A3. Préférentiellement, l'ébauche 9 peut être montée sur une platine 9' du mouvement 200 comme représenté sur la figure 11. En fonction de la localisation de l'axe A3 relativement à l'axe A2, il suffit à l'horloger de choisir une ébauche 9 adéquate dotée d'un palier 91 dont l'axe coïncide avec l'axe A3 souhaité. Alternativement, l'ébauche 9 peut comporter une pluralité de paliers (non représentés) de façon à réceptionner l'arbre 31 selon un entraxe r souhaité entre l'axe A2 et l'axe A3 et/ou selon une position angulaire de l'axe A3 relativement à l'axe A2 représentés sur la figure 9, l'ensemble des positions angulaires d'entraxe r formant un cercle C.

Le joint de transmission 100 est de préférence du type homocinétique. Le joint est agencé de sorte à lier mécaniquement au moins une première partie 2A du premier arbre au moins mobile en rotation selon un premier axe A2 à au moins une deuxième partie 3A du deuxième arbre au moins mobile en rotation selon un deuxième axe A3. Les premier et deuxième axes sont parallèles ou sensiblement parallèles. Dans ce mode de réalisation, l'au moins une première partie 2A du premier arbre est venue de matière avec le reste du premier arbre. L'au moins une première partie 2A du premier arbre et le reste du premier arbre forment donc un ensemble monobloc et forment donc ensemble le premier arbre. Dans ce mode de réalisation, l'au moins une deuxième partie 3A du deuxième arbre est venue de matière avec le reste du deuxième arbre. L'au moins une deuxième partie 3A du deuxième arbre et le reste du deuxième arbre forment donc un ensemble monobloc et forment donc ensemble le deuxième arbre.

Les arbres 21, 31 sont ici mobiles en rotation respectivement selon des axes A2, A3.

Le joint de transmission comprend, outre l'au moins une première partie 2A de premier arbre et l'au moins une deuxième partie 3A de deuxième arbre, au moins un premier système 15 de rappel élastique agencé de sorte à limiter ou à annuler le jeu entre l'au moins une première partie 2A de premier arbre et l'au moins une deuxième partie 3A de deuxième arbre. L'au moins un premier système de rappel, éventuellement associé à un deuxième système de rappel 16, relie mécaniquement l'au moins une première partie 2A de premier arbre et l'au moins une deuxième partie 3A de deuxième arbre.

Le joint de transmission comporte au moins un organe 10, 110, 210 de liaison disposé à l'interface d'arbres 21, 31 respectifs de deux mobiles 2, 3, notamment à l'interface entre la première partie 2A de premier arbre et la deuxième partie 3A de deuxième arbre.

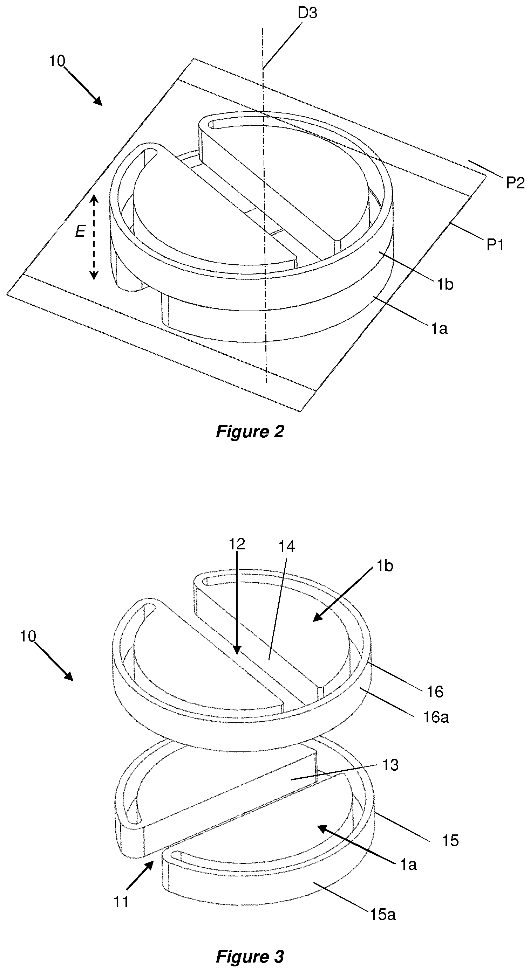

Avantageusement, le joint de transmission comprend un châssis sur lequel est fixé l'au moins un premier système 15 de rappel élastique. En variante illustrée en figure 3, le châssis 15a, 16a est partiellement constitué par une partie de l'au moins un premier système de rappel élastique 15, notamment par une partie du premier système de rappel élastique 15 et par une partie du deuxième système de rappel élastique 16.

De préférence, le joint comprend un deuxième système 16 de rappel élastique agencé de sorte à limiter ou à annuler le jeu entre l'au moins une première partie 2A de premier arbre et l'au moins une deuxième partie 3A de deuxième arbre, l'au moins un premier système de rappel reliant mécaniquement l'au moins une première partie 2A de premier arbre à l'au moins une deuxième partie 3A de deuxième arbre.

Selon le premier mode de réalisation, qui est proche de l'invention telle que revendiquée, le joint de transmission comprend un premier élément de glissière 11 d'une première glissière, et un deuxième élément de glissière 12 ; 12a, 12b d'une deuxième glissière. Ces caractéristiques figurent également dans le libellé de la revendication 1 annexée.

De préférence, le premier élément de glissière comprend une rainure ou plusieurs rainures et/ou le deuxième élément de glissière comprend une rainure ou plusieurs rainures et/ou le premier élément de glissière comprend au moins une surface de friction 13 et/ou le deuxième élément de glissière comprend au moins une surface de friction 14. Ces surfaces de friction sont avantageusement des flancs des éléments de glissières.

De préférence, l'au moins un premier système de rappel élastique comprend une ou plusieurs premières lames élastiques et/ou le deuxième système de rappel élastique comprend une ou plusieurs deuxièmes lames élastiques.

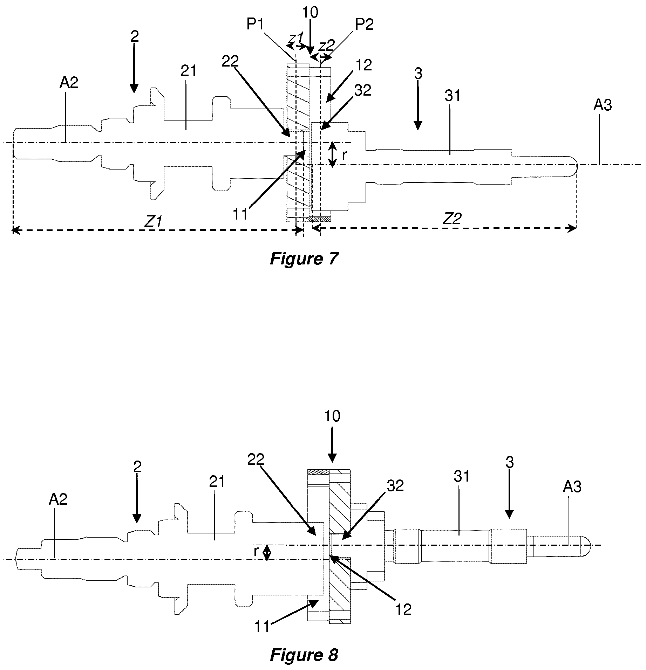

Le premier arbre et le deuxième arbre s'étendent, dans la direction du premier axe ou du deuxième axe, sur des portions axiales Z1 et Z2 alignées chacune respectivement aux axes A2 et A3, mais ne se chevauchant pas. En effet, comme représenté sur la figure 7, le premier arbre s'étend sur une portion Z1 et le deuxième arbre s'étend sur une portion Z2.

Les portions axiales z1, z2 selon lesquelles le premier élément de glissière et le deuxième élément de glissière s'étendent, se superposent dans la direction du premier axe ou du deuxième axe, c'est-à-dire que les portions axiales sont alignées chacune respectivement aux axes A2 et A3, mais elles ne se chevauchent pas, comme représenté sur la figure 7. Le premier élément de glissière et le deuxième élément de glissière sont disposés selon des plans P1, P2 distincts.

Le premier arbre comprend un deuxième élément 22 de glissière de la première glissière, notamment un deuxième élément saillant de forme sensiblement rectangulaire. Alternativement, le deuxième élément pourrait comprendre plusieurs pions. Le deuxième arbre comprend un deuxième élément 32 de glissière de la deuxième glissière, notamment un deuxième élément saillant de forme sensiblement rectangulaire. Alternativement, le deuxième élément pourrait comprendre plusieurs pions.

Ainsi, dans le premier mode de réalisation, l'organe 10 de liaison est doté de deux éléments de glissière 11, 12 ou deux coulisses 11, 12 assimilables à celles d'un joint d'Oldham. Ces coulisses 11, 12 sont par exemple en creux et destinées à coopérer respectivement avec des éléments de glissière ou éléments de coulissement 22, 32 des arbres 21, 31 des mobiles 2, 3. Ces éléments 22, 32 sont par exemple saillants. Ces éléments 22, 32 présentent chacun une géométrie sensiblement complémentaire à celle des coulisses 11, 12. Par exemple, ces éléments 22, 32 peuvent présenter une conformation à section sensiblement rectangulaire selon un plan perpendiculaire aux axes A2, A3, cette conformation de section rectangulaire prolongeant l'arbre dans le sens de son axe. Par exemple, ces éléments 22, 32 ont des formes parallélépipédiques avec un flanc de plus grande dimension s'étendant perpendiculairement aux axes A2, A3 des arbres. Le plus grand côté de la conformation parallélépipédique peut correspondre ou sensiblement correspondre au diamètre d'une portion des parties (2A), (3A) respectives des premier et deuxième arbres.

Dans le premier mode de réalisation, les coulisses 11, 12 sont disposées selon deux plans distincts P1, P2 sensiblement parallèles comme représenté sur la figure 7. Les plans sont par exemple les plans médians des coulisses.

Avantageusement, l'organe 10 comporte également au moins un élément 13, 14 de friction destiné à relier à moindre jeux, notamment à moindre jeux angulaires, les mobiles 2 et 3. Les éléments de friction sont des parties des coulisses 11, 12, notamment des faces de contact des coulisses. Les éléments de frictions sont rappelés en contact contre les éléments de coulissement 22, 32 par les premier et deuxième systèmes de rappel élastique. Pour ce faire, l'au moins un élément 13, 14 de friction coopère avec un élément de rappel élastique 15, 16 destiné à rappeler l'au moins un élément 13, 14 en état de coopération avec l'un ou l'autre des éléments de coulissement 22, 32 des arbres 21, 31, notamment en contact avec l'un ou l'autre des éléments de coulissement 22, 32 des arbres 21, 31. Ainsi, l'organe 10 peut relier cinématiquement, notamment homocinétiquement ou sensiblement homocinétiquement, deux mobiles 2, 3 dont les axes A2, A3 de rotation sont sensiblement parallèles et rapprochés, tout en minimisant autant que faire se peut les jeux angulaires à l'interface des arbres 21, 31.

Dans le premier mode de réalisation, l'organe 10 comporte deux éléments 13, 14 de friction qui sont confondus respectivement avec les coulisses 11, 12. Chaque coulisse 11, 12 ou élément de friction 13, 14 est rappelé élastiquement par un élément élastique 15, 16 qui se présente sous la forme d'une lame élastique 15, 16 définissant le pourtour de portions 1a, 1b de l'organe 10. L'épaisseur de l'organe est notée E sur les différentes figures.

L'organe 10 est par exemple constitué de deux portions 1a, 1b disposées respectivement selon les deux plans P1, P2 parallèles. La première portion 1a comporte la première coulisse 11, le premier élément de friction 13, ainsi que la lame élastique 15. La deuxième portion 1b comporte la deuxième coulisse 12, le deuxième élément de friction 14, ainsi que la lame élastique 16. Préférentiellement, chaque portion 1a, 1b se présente sous la forme d'un sous-ensemble monobloc ou venu de matière. Les portions 1a, 1b peuvent être solidarisées par soudage, notamment par soudage laser, en particulier sur une zone prédéfinie des portions 1a, 1b de façon à pérenniser le caractère élastique des éléments 15, 16.

Alternativement, l'organe 10 peut se présenter sous la forme d'un composant monobloc ou venu de matière.

Les sous-ensembles 1a, 1b ou l'organe 10 peuvent être réalisés en silicium et/ou en silicium revêtu, notamment revêtu d'oxyde de silicium ou de nitrure de silicium, ou en nickel ou en un alliage nickel-phosphore.

Bien entendu, les sous-ensembles 1a, 1b ou l'organe 10 peuvent alternativement être réalisés en un tout autre matériau, notamment tout autre matériau élastique, tel qu'un verre métallique ou encore un polymère.

Les sous-ensembles 1a, 1b peuvent être réalisés en un même matériau ou non. Les sous-ensembles ou l'organe peuvent être fabriqués de manière privilégiée par électroformage ou par gravure. Alternativement, Les sous-ensembles 1a, 1b ou l'organe pourraient être usinés par électroérosion ou encore par laser.

De préférence, les coulisses 11, 12 de l'organe 10 sont disposées de manière perpendiculaire entre elles de façon à permettre une transmission des mouvements de rotation entre les arbres 21 et 31, telle que celle permise selon le principe d'Oldham. Les coulisses 11, 12 sont de plus de préférence disposées perpendiculairement aux premier et deuxième axes. Le fonctionnement de ce mode de réalisation repose sur le fait que l'arbre menant, par exemple l'arbre 21, entraîne en rotation l'organe de liaison par action de l'élément saillant 22 sur les flancs de la rainure 11 et l'organe de liaison entraîne en rotation l'arbre mené par action des flancs de la rainure 12 sur l'élément saillant 32, les éléments saillants se déplaçant dans les rainures 11 et 12.

L'étendue des coulisses permet de définir l'entraxe maximal entre les axes A2, A3. La localisation du palier 91 permet de définir la position de l'axe A3 relativement à l'axe A2 pour une plage d'entraxes r donnée. Préférentiellement, l'organe 10 de liaison permet de définir des entraxes r compris entre 0 et 1 mm, voire entre 0 et 0.6 mm.

De manière générale, un tel joint de transmission peut être avantageusement mis en œuvre à l'interface des arbres 21 et 31 lorsqu'il n'est pas possible de loger des mobiles dentés entre ces deux éléments.

Avantageusement, le joint de transmission permet de transmettre les mouvements de rotation de l'arbre 21 à l'arbre 31 sans à-coup. Notamment, le mouvement de rotation de la roue 4 est transmis à l'aiguille 6 sans à-coup, ce qui se traduit par une absence de chevrotement de l'aiguille 6. Avantageusement, le joint de transmission, en particulier les éléments 13, 14 de friction de l'organe 10, peut remplacer un clinquant de friction en assurant sa fonction. Préférentiellement, le couple de friction généré est de l'ordre de 0.1 à 5 µNm, voire de l'ordre de 1 à 5 µNm. Un seul et même organe 10 du joint fait ainsi office d'organe de transmission et de régulation de la transmission.

Dans une variante de réalisation (non représentée) du premier mode de réalisation, l'au moins une première partie 2A de premier arbre comprend un troisième système de rappel élastique agencé de sorte à limiter ou à annuler le jeu du premier élément de glissière dans la première glissière et/ou l'au moins une deuxième partie 3A de deuxième arbre comprend un quatrième système de rappel élastique agencé de sorte à limiter ou à annuler le jeu du deuxième élément de glissière dans la deuxième glissière. Le troisième système de rappel peut remplacer le premier système de rappel. Alternativement, le troisième système de rappel peut compléter le premier système de rappel de sorte à limiter ou annuler ensemble le jeu dans la première glissière. Le quatrième système de rappel peut remplacer le deuxième système de rappel. Alternativement, le quatrième système de rappel peut compléter le deuxième système de rappel de sorte à limiter ou à annuler ensemble le jeu dans la deuxième glissière.

Le troisième système de rappel élastique peut comprendre une ou plusieurs troisièmes lames élastiques et/ou le quatrième système de rappel élastique comprendre une ou plusieurs quatrièmes lames élastiques.

Le troisième système de rappel élastique peut comprendre au moins une troisième butée de limitation de la déformation du troisième système de rappel élastique et/ou le quatrième système de rappel élastique peut comprendre au moins une quatrième butée de limitation de la déformation du quatrième système de rappel élastique.

Autrement dit, le joint de transmission 100 selon le premier mode est un joint d'Oldham ayant une première et une deuxième glissières ou coulisses et comprenant un premier système élastique de limitation, voire d'annulation, du jeu dans la première glissière et un deuxième système élastique de limitation, voire d'annulation, du jeu dans la deuxième glissière.

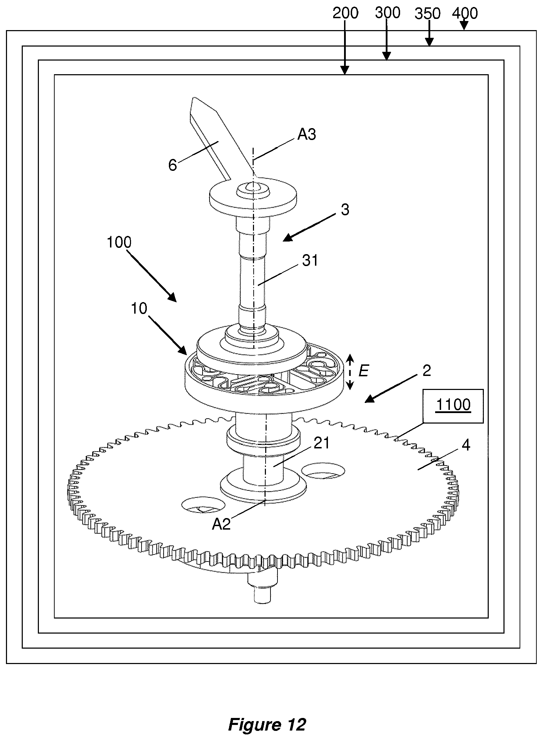

Un deuxième mode de réalisation d'une pièce d'horlogerie 400 est décrit ci-après en référence aux figures 12 à 22.

Ce deuxième mode de réalisation diffère du premier mode de réalisation au niveau du joint de transmission.

Comme dans le premier mode de réalisation, le joint de transmission 100 est de préférence du type homocinétique. Le joint est agencé de sorte à lier mécaniquement au moins une première partie 2A du premier arbre 21 au moins mobile en rotation selon un premier axe A2 à au moins une deuxième partie 3A du deuxième arbre 31 au moins mobile en rotation selon un deuxième axe A3. Les premier et deuxième axes sont parallèles ou sensiblement parallèles. L'au moins une première partie 2A du premier arbre est venue de matière avec le reste du premier arbre. L'au moins une première partie 2A et le reste du premier arbre forment donc un ensemble monobloc et forment donc ensemble le premier arbre. L'au moins une deuxième partie 3A du deuxième arbre est venue de matière avec le reste du deuxième arbre. L'au moins une deuxième partie 3A et le reste du deuxième arbre forment donc un ensemble monobloc et forment donc ensemble le deuxième arbre.

Le joint comprend l'au moins une première partie 2A de premier arbre et l'au moins une deuxième partie 3A de deuxième arbre.

Le joint de transmission 100 comprend également un organe de liaison 10.

Les arbres 21, 31 sont mobiles en rotation respectivement selon des axes A2, A3.

L'organe de liaison mécanique est destiné à lier mécaniquement le premier arbre 21 à un deuxième arbre 31. L'organe de liaison mécanique comprend un premier élément de glissière 11 d'une première glissière, s'étendant notamment selon un premier axe D1, et un deuxième élément de glissière 12 d'une deuxième glissière, s'étendant notamment selon un deuxième axe D2.

Les premier et deuxième éléments de glissière étant destinés à coopérer avec l'au moins une première partie 2A de premier arbre et l'au moins une deuxième partie 3A de deuxième arbre.

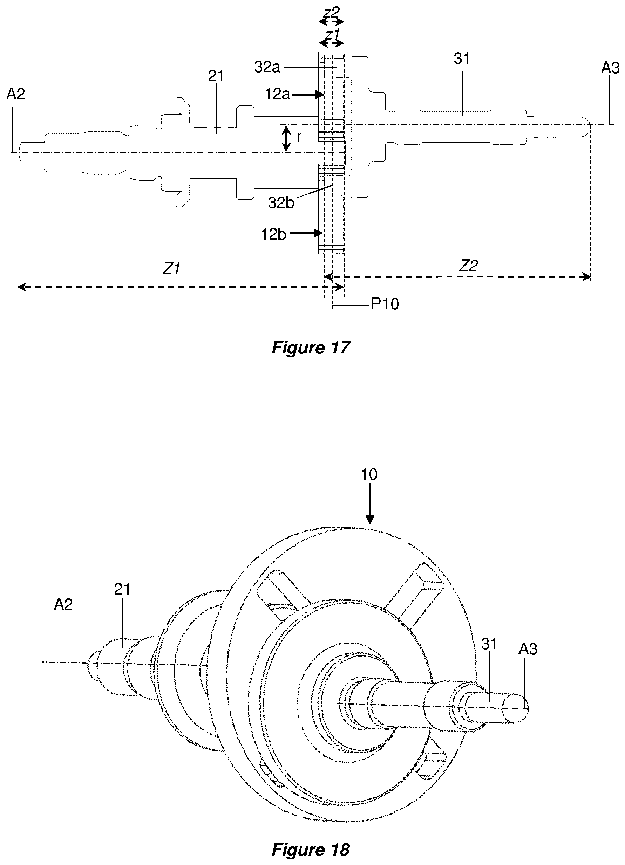

Toutefois, dans le deuxième mode de réalisation, le premier élément de glissière et le deuxième élément de glissière s'étendent, selon un troisième axe D3 :
- perpendiculaire ou sensiblement perpendiculaire au premier axe D1 et au deuxième axe D2, et/ou
- parallèle ou sensiblement parallèle aux axes A2, A3 des premier et deuxième arbres,
sur des portions axiales z1, z2 se chevauchant en partie ou totalement, comme représenté sur la figure 17.

Dans le mode de réalisation représenté, les portions axiales selon lesquelles le premier élément de glissière et le deuxième élément de glissière s'étendent, dans la direction du premier axe ou du deuxième axe, se chevauchent totalement, c'est-à-dire qu'elles se recouvrent totalement ou qu'elles coïncident. Le premier élément de glissière et le deuxième élément de glissière sont alors disposés selon un même plan médian P10.

Alternativement, les portions axiales selon lesquelles le premier élément de glissière et le deuxième élément de glissière s'étendent, dans la direction du premier axe ou du deuxième axe, pourraient se chevaucher en partie. Ce serait par exemple le cas d'un organe 10 dans lequel le premier élément de glissière et le deuxième élément de glissière seraient réalisés par des rainures non débouchantes pratiquées depuis deux faces opposées de l'organe, la somme des profondeurs des rainures étant supérieure à l'épaisseur E de l'organe. Le premier élément de glissière et le deuxième élément de glissière seraient alors disposés selon des plans médians sensiblement confondus.

Ainsi, dans ce mode de réalisation, l'organe 10 de liaison est doté de coulisses 11, 12 disposées selon un seul et même plan P10 qui coïncide sensiblement au plan médian de l'organe 10. Ce deuxième mode de réalisation a ainsi pour avantage d'être particulièrement compact et peu encombrant. Un tel organe présente également comme avantage d'être particulièrement simple à fabriquer, notamment lorsque ledit organe est fabriqué par électroformage ou par gravure.

Dans ce deuxième mode de réalisation, le premier élément de glissière comprend une rainure 11 ou plusieurs rainures. Le deuxième élément de glissière comprend plusieurs rainures 12a, 12b. Les rainures 12a et 12 b sont avantageusement alignées.

Avantageusement, le premier élément de glissière comprend au moins une surface 13 de friction, notamment une surface 13 de friction formée par une face de la rainure 11. Avantageusement, le deuxième élément de glissière comprend au moins deux surfaces 14a et 14b de friction, notamment des surfaces 14a et 14b de friction formées par des faces des rainures 12a et 12b.

Comme dans le premier mode de réalisation, le joint de transmission comprend avantageusement un châssis 17 sur lequel est fixé l'au moins un premier système de rappel élastique et/ou le deuxième système de rappel élastique.

Au moins une coulisse 11, 12 est formée de deux portions délimitées par l'une ou l'autre des coulisses 11, 12. La coulisse 12 est par exemple formée de deux portions 12a, 12b délimitées par la coulisse 11. A l'instar du premier mode de réalisation, des éléments de friction 13, 14 sont confondus respectivement avec les coulisses 11, 12. Ainsi, on distingue des éléments de friction 14a, 14b sur chacune des portions 12a, 12b de la coulisse 12. Pour ce faire, la coulisse 11, 12a, 12b ou l'élément de friction 13, 14a, 14b est rappelé par un élément élastique ou système de rappel élastique qui comprend une lame élastique venue de matière avec le châssis 17 de l'organe 10. Plus particulièrement, chaque flanc de coulisse peut être venu de matière avec une lame élastique destinée à rappeler les éléments 11, 12 ou 13, 14 en état de coopération avec l'un ou l'autre des éléments de coulissement 22, 32 des arbres 21, 31, notamment en contact avec l'un ou l'autre des éléments de coulissement 22, 32 des arbres 21, 31.

Ainsi, le premier arbre et le deuxième arbre s'étendent, dans la direction du premier axe ou du deuxième axe, sur des portions axiales Z1 et Z2 qui se chevauchent totalement ou en partie.

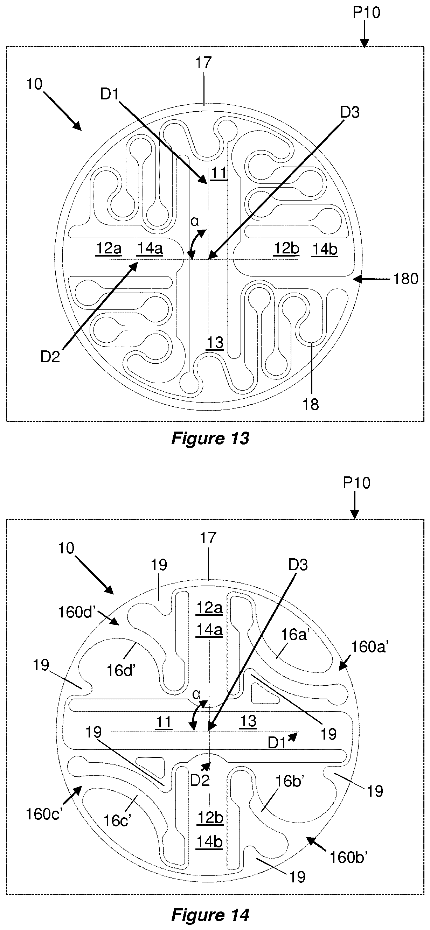

Dans les première et deuxième variantes du deuxième mode de réalisation, représentées en détail sur les figures 13 et 14, le premier système de rappel élastique comprend une ou plusieurs premières lames élastiques prévues notamment pour rappeler élastiquement une coulisse 11, notamment chacun des flancs de la rainure 11. Le deuxième système de rappel élastique comprend une ou plusieurs deuxièmes lames élastiques prévues notamment pour rappeler élastiquement les portions de coulisse 12a, 12b, notamment chacun des flancs des portions de coulisse 12a, 12b.

Les figures 13 et 14 illustrent deux premières variantes de construction de l'organe 10 selon le deuxième mode de réalisation. Les variantes se distinguent par les agencements des lames élastiques qui sont différents. Dans la première variante, les coulisses, les éléments de friction et les éléments élastiques sont fabriqués dans la continuité des uns des autres. On distingue ainsi un réseau monolithique 18 de lames élastiques solidarisé à un châssis 17 au niveau de son extrémité 180. Dans la deuxième variante, on distingue des lames élastiques 16a'-16d' chacune venues de matière, à une première extrémité, avec chacun des flancs des portions 12a, 12b de la coulisse 12. Ces lames élastiques sont chacune solidarisées au châssis 17 au niveau d'une deuxième extrémité 160a' - 160d'. Avantageusement, des butées 19 de délimitation des coulisses 11, 12sont prévues de façon à éviter tout risque de plastification des lames 16a'-16d'. Ainsi, dans la deuxième variante du deuxième mode de réalisation, le premier système de rappel élastique comprend au moins une première butée 19 de limitation de la déformation du premier système de rappel élastique et/ou le deuxième système de rappel élastique comprend au moins une deuxième butée 19 de limitation de la déformation du deuxième système de rappel élastique.

Dans des variantes non représentées, l'organe 10 peut ne pas présenter de châssis 17.

Le réseau 18 ou les lames 16a'-16d' peuvent bien sûr comporter des variations de sections, en particulier des cols, de façon à ajuster le couple de friction à l'encontre de l'élément de coulissement 22 et/ou de l'élément de coulissement 32. Préférentiellement, à l'instar du premier mode de réalisation, le couple de friction généré est de l'ordre de 0.1 à 5 µNm, voire de l'ordre de 1 à 5 µNm.

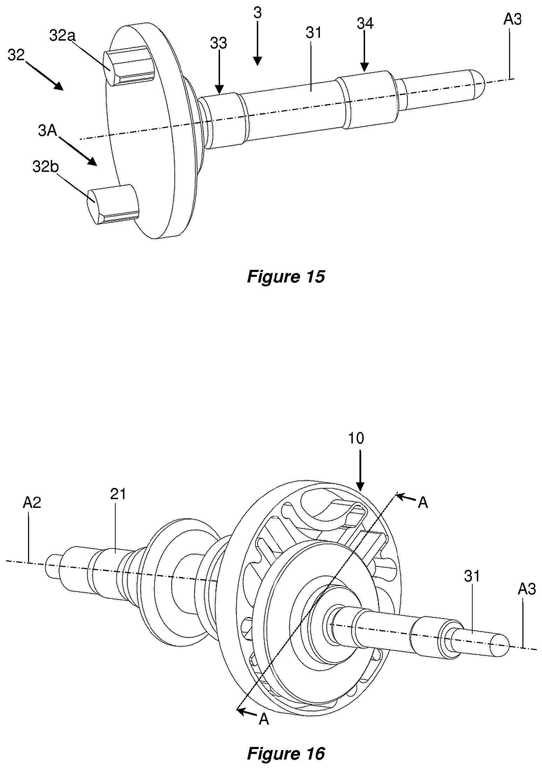

De façon à permettre une coopération adéquate entre la coulisse 12 et l'élément de coulissement 32, ce dernier est réalisé en deux parties 32a, 32b dont les géométries sont complémentaires à celles des portions 12a, 12b de la coulisse 12. Par exemple, les parties 32a, 32b peuvent se présenter sous forme de plots ou de pions 32a, 32b comme représenté sur les figures 15 et 17.

Une troisième variante du deuxième mode de réalisation de l'organe de liaison 10, et plus globalement une troisième variante du deuxième mode de réalisation de joint de transmission, est décrite ci-après en référence aux figures 18 à 21.

Cette troisième variante diffère des première et deuxième variantes décrites ci-dessus en ce que l'organe de liaison comprend des rainures rigides, c'est-à-dire des rainures à flancs non déformables (lors de l'utilisation normale de l'organe). Ainsi, les systèmes de rappel élastiques peuvent être déportés sur les arbres 21 et 31, notamment aux extrémités des arbres 21 et 31.

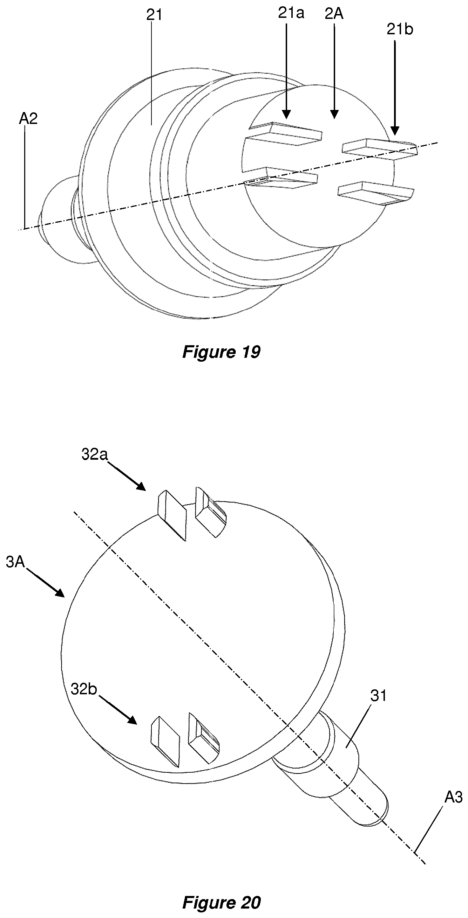

Comme visible sur les figures 19 et 20, ce sont les première partie de premier arbre 2A et deuxième partie de deuxième arbre 2B qui peuvent présenter les systèmes de rappel élastiques.

Un premier système de rappel élastique est constitué par deux paires de saillies ou lamelles 21a et 21b.

Un deuxième système de rappel élastique est constitué par deux paires de saillies ou lamelles 32a et 32b.

Ces paires de lamelles peuvent être constituées chacune par une goupille fendue.

Ces lamelles sont chacune élastiquement déformées lorsqu'elles sont en place dans les rainures de l'organe de liaison. Autrement dit, ces lamelles sont chacune élastiquement précontraintes lorsqu'elles sont en place dans les rainures de l'organe de liaison.

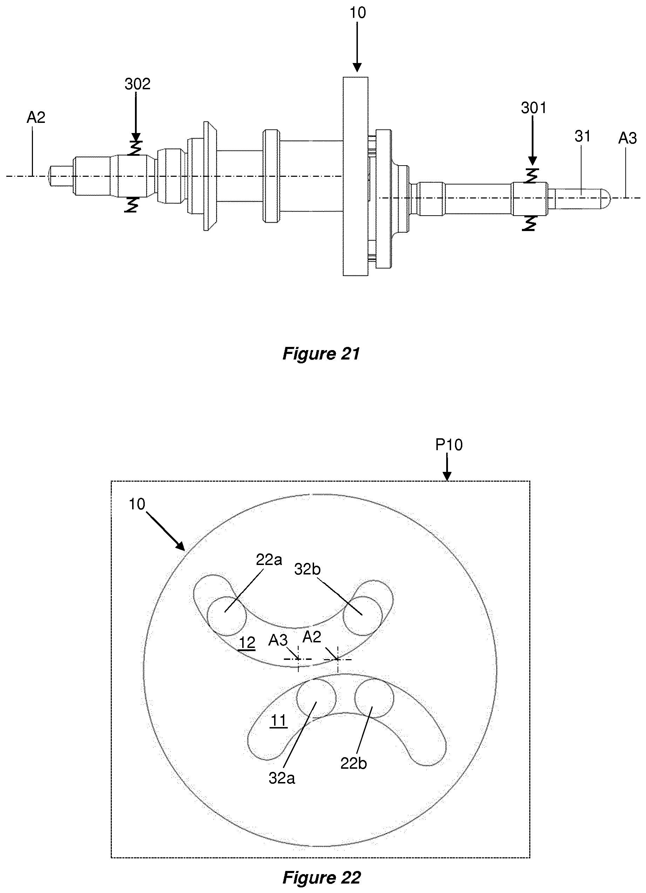

Alternativement ou complémentairement, comme visible sur la figure 21, les arbres 21, 31 peuvent respectivement coopérer avec des éléments de friction 301, 302. De manière plus générale, les mobiles 2, 3 peuvent respectivement coopérer avec des éléments de friction 301, 302. Ces moyens de friction 301, 302 peuvent par exemple se présenter sous la forme d'un clinquant. Un seul clinquant 301, 302 peut suffire pour générer un couple de friction adéquat.

Dans les trois premières variantes du deuxième mode de réalisation, les glissières sont rectilignes. Elles permettent chacune un coulissement selon une ligne.

Le principe de fonctionnement du joint de transmission selon le deuxième mode de réalisation est semblable à celui du joint de transmission selon le premier mode de réalisation.

Une quatrième variante du deuxième mode de réalisation de l'organe de liaison 10 et plus globalement une quatrième variante du deuxième mode de réalisation de joint de transmission est décrite ci-après en référence à la figure 22.

Cette quatrième variante diffère des première, deuxième et troisième variantes décrites ci-dessus en ce que l'organe de liaison comprend des éléments de glissière en creux, notamment des rainures 11, 12 qui ne sont pas rectilignes. En effet, les rainures de glissières sont courbées, notamment en forme d'arc de cercle ou sensiblement en forme d'arc de cercle. Par ailleurs, les rainures ne s'interceptent pas.

Les arbres 21 et 31 comprennent chacun deux goupilles disposées axialement à l'une de leurs extrémités.

L'élément de glissière en creux 11 est prévu pour recevoir un élément saillant de glissière 22b, 32a, notamment une goupille, de chaque arbre 21, 31.

L'élément de glissière en creux 12 est prévu pour recevoir un élément saillant de glissière 22a, 32b, notamment une goupille, de chaque arbre 21, 31.

Le fonctionnement de cette variante de réalisation repose sur le fait que l'arbre menant, par exemple l'arbre 21, entraîne en rotation l'organe de liaison par action des goupilles 22a et 22b sur les flancs respectifs des rainures 11, 12 et l'organe de liaison entraîne en rotation l'arbre mené par action des flancs respectifs des rainures 11, 12 sur les goupilles 32a et 32b, les goupilles se déplaçant dans les rainures 11 et 12.

A la différence des autres variantes précitées, chacun des éléments de glissière des arbres 21, 31 interagissent avec deux éléments de glissière 11, 12 de l'organe 10.

Les premier et/ou deuxième systèmes de rappel élastiques peuvent comme dans les autres modes de réalisation et variantes être disposés sur l'organe de liaison et/ou sur les arbres.

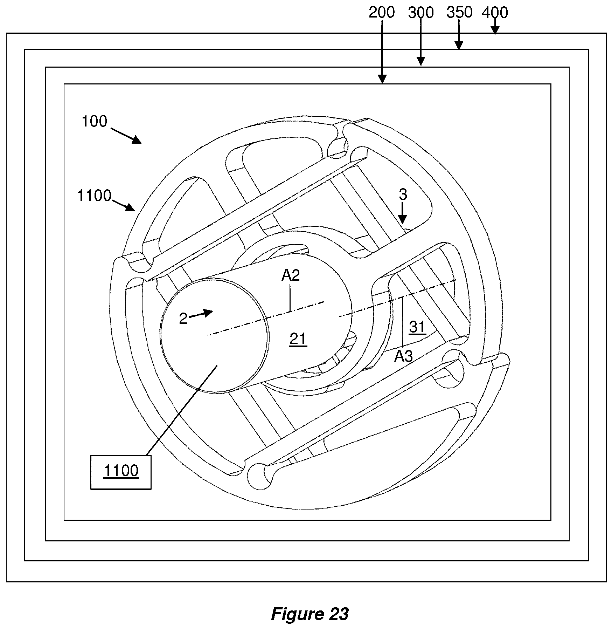

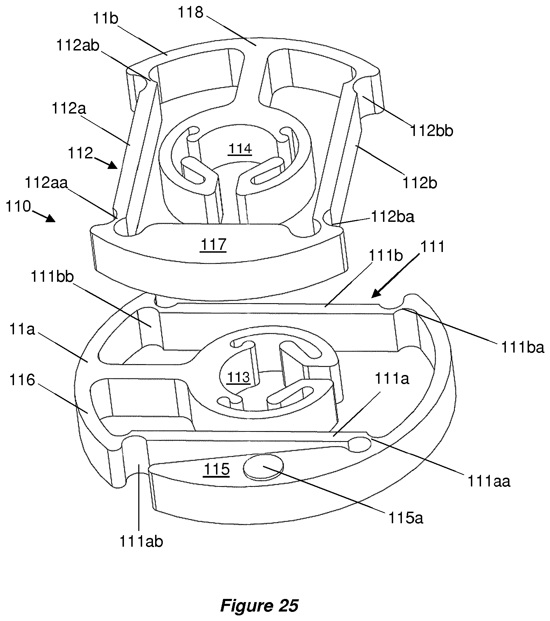

Un troisième mode de réalisation d'une pièce d'horlogerie 400 est décrit ci-après en référence aux figures 23 à 26.

Ce troisième mode de réalisation diffère du premier mode de réalisation au niveau du joint de transmission.

Comme dans le premier mode de réalisation, le joint est agencé de sorte à lier mécaniquement au moins une première partie 2A du premier arbre, ici une première extrémité, par exemple cylindrique du premier arbre, au moins mobile en rotation selon un premier axe A2 à au moins une deuxième partie 3A du deuxième arbre, ici une deuxième extrémité, par exemple cylindrique du deuxième arbre, au moins mobile en rotation selon un deuxième axe A3. Les premier et deuxième axes sont parallèles ou sensiblement parallèles. Ils sont ainsi désaxés. Le joint de transmission comprend l'au moins une première partie 2A de premier arbre et l'au moins une deuxième partie 3A de deuxième arbre. Les arbres 21, 31 sont ici mobiles en rotation respectivement selon des axes A2, A3.

Le joint de transmission comprend au moins un premier système 111 de rappel élastique agencé de sorte à annuler le jeu entre la première partie d'arbre 2A de premier arbre et la deuxième partie d'arbre 3A de deuxième arbre. Le premier système 111 de rappel relie mécaniquement la première partie d'arbre 2A de premier arbre et la deuxième partie d'arbre 3A de deuxième arbre. Le premier système 111 de rappel fait partie d'un organe de liaison 110.

Le joint de transmission comprend un deuxième système 112 de rappel élastique agencé de sorte à annuler le jeu entre la première partie d'arbre 2A de premier arbre et la deuxième partie d'arbre 3A de deuxième arbre. Le deuxième système 112 de rappel relie mécaniquement la première partie d'arbre 2A de premier arbre et la deuxième partie d'arbre 3A de deuxième arbre. Le deuxième système 112 fait partie de l'organe de liaison 110.

Le joint de transmission comprend donc l'organe 110 de liaison disposé à l'interface d'arbres 21, 31 respectifs de deux mobiles 2, 3, notamment à l'interface entre la première partie d'arbre 2A de premier arbre et la deuxième partie d'arbre 3A de deuxième arbre.

Ainsi, dans le troisième mode de réalisation du joint de transmission, l'organe 110 de liaison est doté d'éléments de liaison 111, 112 dont le principe de fonctionnement est assimilable à ceux connus des joints de Schmidt. Ces éléments de liaison 111, 112 sont chacun reliés à des éléments de réception 113, 114 des arbres 21, 31 des mobiles 2, 3, notamment des extrémités des arbres 21, 31.

L'organe 110 comprend deux portions 11a, 11b disposées respectivement selon deux plans P11, P12 parallèles. Ces plans P11 et P12 sont de préférence perpendiculaires aux axes A2 et A3.

La première portion 11a comporte des premiers éléments de liaison 111 se présentant sous la forme de deux bras flexibles 111a, 111b parallèles ou sensiblement parallèles. La flexibilité de chacun des bras 111a, 111b est mise en œuvre par des cols flexibles 111aa, 111ab ; 111ba, 111bb disposés aux extrémités de chacun desdits bras. Ainsi, chacun des bras 111a, 111b est susceptible de se mouvoir en translation ou sensiblement en translation en regard d'un châssis 115 de la portion 11a. Ces bras 111a, 111b sont également reliés par un bras 116 supportant l'élément de réception 113 du premier arbre. Ainsi, le bras 116 est assimilable à une table à quatre cols circulaires de façon à ce que l'élément de réception 113 puisse se déplacer en regard du châssis 115. Le mouvement de l'élément de réception 113 relativement au châssis 115 s'approche d'un mouvement de translation, notamment de faible amplitude.

La structure de la portion 11b est semblable à celle de la portion 11a. Celle-ci comporte des deuxièmes éléments de liaison 112 se présentant sous la forme de deux bras flexibles 112a, 112b parallèles ou sensiblement parallèles. La flexibilité de chacun des bras 112a, 112b est mise en œuvre par des cols flexibles 112aa, 112ab ; 112ba, 112bb disposés aux extrémités de chacun desdits bras. Ainsi, chacun des bras 112a, 112b est susceptible de se mouvoir en translation ou sensiblement en translation en regard d'un châssis 117 de la portion 11b. Ces bras 112a, 112b sont également reliés par un bras 118 supportant un élément de réception 114 d'un deuxième arbre. Ainsi, le bras 118 est assimilable à une table à quatre cols circulaires de façon à ce que l'élément de réception 114 puisse se déplacer en regard du châssis 117. Le mouvement de l'élément de réception 114 relativement au châssis 117 s'approche d'un mouvement de translation, notamment de faible amplitude.

Ainsi, le premier système 111a, 111b de rappel élastique comporte au moins un bras élastiquement déformable. De même, le deuxième système 112a, 112b de rappel élastique comporte au moins un bras élastiquement déformable.

Préférentiellement, chaque portion 11a, 11b se présente sous la forme d'un sous-ensemble monobloc ou venu de matière. Les portions 11a, 11b peuvent être solidarisées par soudage, notamment par soudage laser, en particulier au niveau des châssis 115, 117. Préférentiellement, ces châssis ou l'un ou l'autre des châssis présentent une surépaisseur de sorte à ce que les bras puissent se déplacer sans frottement les uns par rapport aux autres. Le châssis 115 présente ici une surépaisseur 115a.

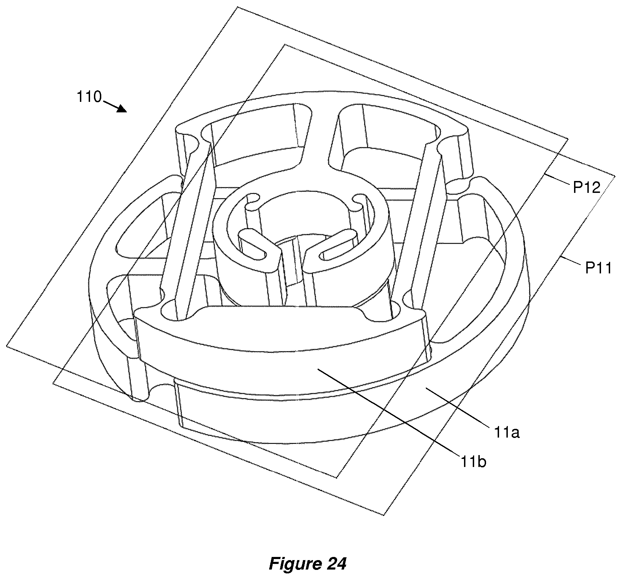

Les portions 11a, 11b sont ici montées l'une sur l'autre de telle façon que les bras 111a, 111b, 112a, 112b puissent se translater dans des directions orthogonales ou sensiblement orthogonales. Avant assemblage du dispositif de transmission, l'organe 110 présente des éléments de réception 113, 114 concentriques ou sensiblement concentriques comme représenté sur la figure 24 où les bras 111a, 111b, 112a, 112b sont au repos.

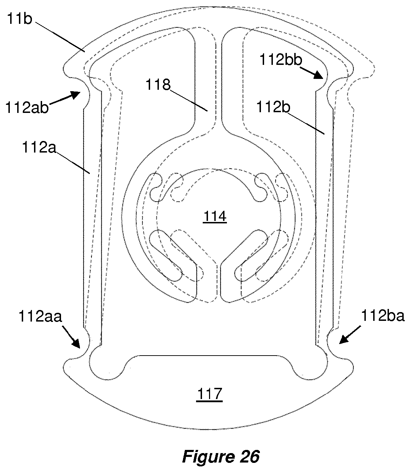

Lors de l'assemblage du dispositif de transmission, les éléments de réception 113, 114 sont écartés l'un relativement à l'autre de sorte à ce que chacun de ces éléments de réception soit solidarisé à l'un ou l'autre des arbres 21, 31 des mobiles 2, 3. Cet écartement, d'une distance correspondant à celle séparant l'axe A2 de l'axe A3, induit le déplacement des bras 111a, 111b, 112a, 112b et une accumulation d'une énergie potentielle élastique au niveau de chacun des cols flexibles. A titre d'exemple, la figure 26 illustre la portion 11b selon deux états de déplacement des bras 112a, 112b.

Ainsi, le joint de transmission comprend le premier élément de réception et l'au moins un premier système de rappel élastique est agencé de sorte à être déformable de façon à positionner le premier élément de réception selon le premier axe.

De manière similaire, le joint de transmission comprend le deuxième élément de réception et le deuxième système de rappel élastique est agencé de sorte à être déformable de façon à positionner le deuxième élément de réception selon le deuxième axe.

Les éléments de réception peuvent comprendre des pinces à mâchoires élastiques.

En fonctionnement du dispositif de transmission, les bras 111a, 111b, 112a, 112b se déplacent selon leurs cols flexibles respectifs tout en restant parallèles ou sensiblement parallèles l'un par rapport à l'autre. Le déplacement selon deux directions orthogonales ou sensiblement orthogonales des bras 111a, 111b, 112a, 112b permet de proposer un organe de liaison 110 permettant de relier homocinétiquement deux mobiles dont les axes de rotation sont parallèles ou sensiblement parallèles et rapprochés. Avantageusement, l'énergie potentielle élastique accumulée par les éléments de rappel, sous la forme de cols flexibles, permet de relier à moindre jeux, notamment à moindre jeux angulaires, les mobiles 2 et 3. Ainsi, l'organe 110 peut relier homocinétiquement deux mobiles 2, 3 dont les axes A2, A3 de rotation sont parallèles ou sensiblement parallèles et rapprochés, tout en minimisant autant que faire se peut les jeux angulaires à l'interface des arbres 21, 31.

Avantageusement encore, l'énergie potentielle élastique accumulée par l'organe 110 de liaison lors de l'assemblage du dispositif de transmission reste constante lors du fonctionnement du dispositif de transmission, étant donné que les déplacements angulaires des bras 111a, 111b, 112a, 112b sont déphasés de 90° lors de la rotation des arbres 21, 31. Préférentiellement, les éléments de réception 113, 114 présentent une structure flexible de façon à permettre un assemblage au reste des arbres 21, 31 par chassage des extrémités.

A l'instar des éléments du premier mode de réalisation, les sous-ensembles 11a, 11b ou l'organe 110 sont préférentiellement réalisés en silicium et/ou en silicium revêtu, notamment revêtu d'oxyde de silicium ou de nitrure de silicium, ou en nickel ou un alliage en nickel-phosphore. Bien entendu, les sous-ensembles 11a, 11b ou l'organe 110 peuvent alternativement être réalisés en un tout autre matériau, notamment tout autre matériau élastique, tel qu'un verre métallique ou encore un polymère.

Ces sous-ensembles 11a, 11b peuvent être réalisés en un même matériau ou non. Ces sous-ensembles ou cet organe peuvent être fabriqués de manière privilégiée par électroformage ou par gravure. Alternativement, de tels composants peuvent être usinés par électroérosion ou encore par laser. Les sous-ensembles 11a, 11b peuvent être solidarisés, notamment au niveau du châssis 115, par collage, soudage, brasage ou par tout autre procédé adapté.

Dans une variante de réalisation alternative du troisième mode de réalisation, l'organe 110 peut comprendre deux portions 11a, 11b disposées selon un seul et même plan. Ce plan est de préférence perpendiculaire aux axes A2 et A3. Dans cette variante, les bras 111a, 111b présentent une longueur différente de celle des bras 112a, 112b de sorte que le premier ou le deuxième système de rappel élastique puisse être disposé dans le même plan que le deuxième ou le premier système de rappel élastique. Les éléments de réception 113, 114 peuvent être adaptés de façon à cohabiter sur un seul et même plan, et peuvent se présenter, par exemple, sous la forme de paires d'alésages ou de saillies disposés perpendiculairement.

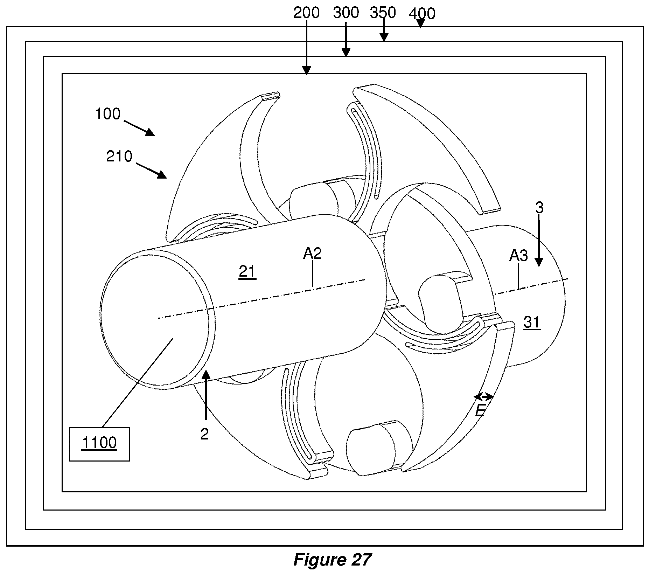

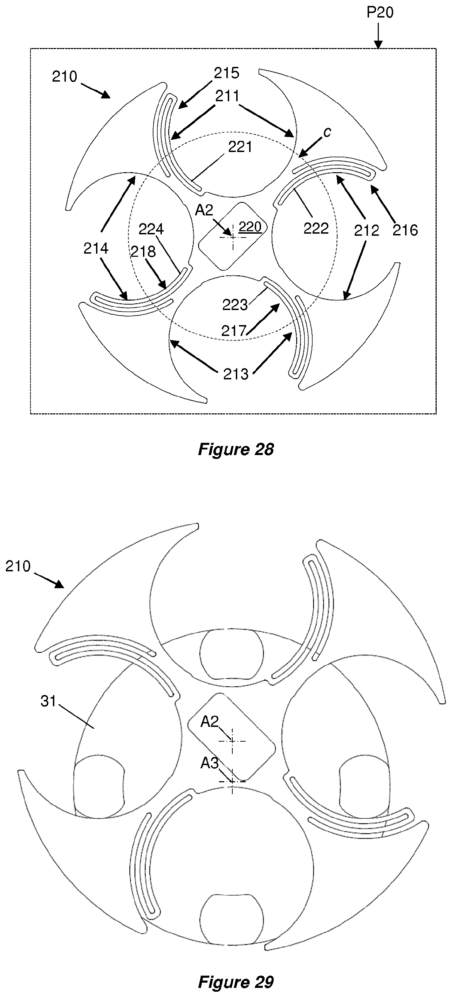

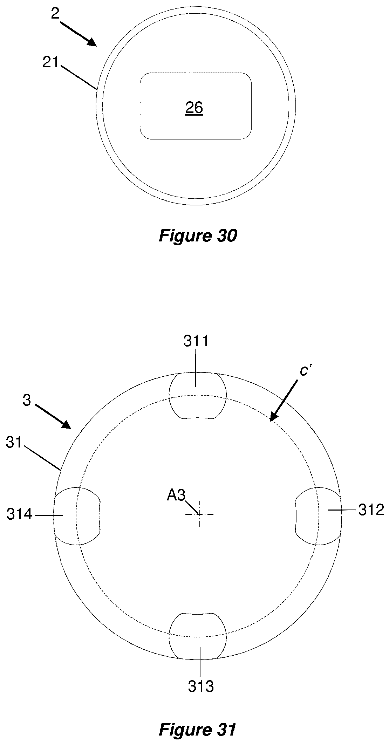

Un quatrième mode de réalisation d'une pièce d'horlogerie 400 est décrit ci-après en référence aux figures 27 à 31.

Ce quatrième mode de réalisation diffère du premier mode de réalisation au niveau du joint de transmission.

Comme dans le premier mode de réalisation, le joint est agencé de sorte à lier mécaniquement au moins une première partie 2A du premier arbre au moins mobile en rotation selon un premier axe A2 à au moins une deuxième partie 3A du deuxième arbre au moins mobile en rotation selon un deuxième axe A3. Les premier et deuxième axes sont parallèles ou sensiblement parallèles. Dans ce mode de réalisation, l'au moins une première partie 2A du premier arbre est un plateau ou un disque 210 rapporté à l'extrémité du reste de l'arbre 21. Toutefois, la première partie peut être venue de matière avec le reste du premier arbre. La première partie et le reste de l'arbre peuvent donc former ensemble le premier arbre, ce premier arbre étant monobloc. Dans ce mode de réalisation, l'au moins une deuxième partie 3A du deuxième arbre est monobloc avec le reste du deuxième arbre. La deuxième partie d'arbre et le reste du deuxième arbre forment donc ensemble le deuxième arbre.

Les arbres 21, 31 sont ici mobiles en rotation respectivement selon des axes A2, A3.

Le joint de transmission comprend au moins un premier système 221 de rappel élastique agencé de sorte à limiter ou à annuler le jeu entre l'au moins une première partie 2A de premier arbre et l'au moins une deuxième partie 3A de deuxième arbre. L'au moins un premier système de rappel relie mécaniquement l'au moins une première partie 2A de premier arbre et l'au moins une deuxième partie 3A de deuxième arbre.

Le joint de transmission comporte au moins un organe 210 de liaison disposé à l'interface des arbres 21, 31 respectifs de deux mobiles 2, 3, notamment à l'interface entre la première partie 2A de premier arbre et la deuxième partie 3A de deuxième arbre.

L'organe 210 de liaison ou châssis 210 est solidaire en rotation de l'un ou l'autre des arbres 21, 31. Dans le mode de réalisation représenté, l'organe 210 est solidaire en rotation de l'arbre 21 au niveau d'une extrémité 26 de l'arbre 21. Cette extrémité 26 peut présenter une section non circulaire et coopérer avec une géométrie complémentaire 220 de l'organe 210 de façon à permettre la transmission d'un couple de l'arbre 21 à l'organe 210. Ainsi, l'organe 210 est ici solidaire en rotation du mobile 2 et est donc mobile en rotation selon l'axe A2. Cet organe 210 est avantageusement formé sur un seul plan P20.

L'organe 210 comprend des surfaces de came 211, 212, 213, 214 incurvées, disposées sur le même plan P20, qui sont prévues pour coopérer respectivement avec des plots 311, 312, 313, 314 prévus sur la deuxième partie 3A du deuxième arbre 31. Dans le mode de réalisation représenté, les surfaces 211, 212, 213, 214 sont des portions de cercles centrées sur un même cercle c lui-même centré sur l'axe A2. Les plots 311, 312, 313, 314 sont, quant à eux, disposés sur un même cercle c' centré sur l'axe A3. Les rayons des cercles c et c' sont de préférence égaux ou sensiblement égaux. Les surfaces de came et les plots sont, de préférence, équi-répartis respectivement autour des axes A2, A3. La coopération des surfaces 211, 212, 213, 214 et des plots 311, 312, 313, 314 entraîne ainsi le mobile 3 selon un mouvement de rotation selon l'axe A3.

Les surfaces 211, 212, 213, 214 peuvent coopérer avec chacun des plots 311, 312, 313, 314 de manière simultanée ou non. Préférentiellement, seules deux surfaces de came coopèrent simultanément avec leur plot respectif.

Préférentiellement, les surfaces 211, 212, 213, 214 comportent respectivement des éléments de friction 215, 216, 217, 218. Chaque élément de friction 215, 216, 217, 218 est agencé de sorte à être rappelé élastiquement à l'encontre d'un plot par un élément élastique de rappel 221, 222, 223, 224. Chaque élément élastique de rappel se présente de préférence sous la forme d'une lame élastique 221, 222, 223, 224. Avantageusement, au moins un élément de friction est toujours en contact avec un plot, et ce quelle que soit la position angulaire de l'organe 210 de liaison. Une telle solution permet ainsi de supprimer les jeux angulaires à l'interface des arbres 21, 31 tout en obviant aux risques d'hyperstatisme pouvant prétériter le caractère homocinétique du dispositif de transmission auquel prend part l'organe de liaison.

Ainsi, le châssis comprend la première partie 2A du premier arbre et au moins une surface de came 211, 212, 213, 214, notamment au moins une ouverture circulaire, destinée à coopérer avec au moins un pion prévu sur le deuxième arbre, le premier système 221, 222, 223, 224 de rappel élastique du châssis comprenant au moins une lame élastique prévue sur l'au moins surface de came.

Avantageusement, le châssis comprend N surfaces de came et/ou N lames élastiques agencées selon une symétrie de rotation d'ordre N, avec N un nombre entier supérieur ou égal à 2. De préférence, N= 2 ou N=3 ou N=4.

Alternativement, les éléments de friction pourraient être supportés par les plots.

A l'instar des éléments des modes de réalisation précités, l'organe 210 est préférentiellement réalisé en silicium et/ou en silicium revêtu, notamment revêtu d'oxyde de silicium ou de nitrure de silicium, ou en nickel ou un alliage en nickel-phosphore. Bien entendu, l'organe 210 peut alternativement être réalisé en un tout autre matériau, notamment tout autre matériau élastique, tel qu'un verre métallique ou encore un polymère. Cet organe peut être fabriqué de manière privilégiée par électroformage ou par gravure. Alternativement, il pourrait être usiné par électroérosion ou encore par laser.

Comme vu précédemment, dans les différents modes de réalisation et dans les différentes variantes, un joint de transmission permet de relier cinématiquement, notamment homocinétiquement, deux mobiles dont les axes de rotation sont parallèles ou sensiblement parallèles et rapprochés.

Un tel joint de transmission peut, par exemple, être avantageusement mis en œuvre au sein d'une pièce d'horlogerie à affichage analogique modulaire au sein de laquelle l'axe de rotation d'un premier mobile d'affichage d'une indication horaire ou dérivée de l'heure est déplaçable en regard de l'axe de rotation d'un deuxième mobile d'un mouvement horloger fournissant ladite indication horaire ou dérivée de l'heure. Le joint de transmission peut en particulier être intégré au sein d'un mécanisme de chronographe. Bien entendu, le joint de transmission peut néanmoins être employé pour déporter tout deuxième mobile horloger relativement à un premier mobile horloger. Le mobile n'est pas obligatoirement un élément du mouvement. Il peut par exemple comprendre une tige de remontoir de façon à proposer un dispositif de transmission amélioré vis-à-vis du dispositif divulgué dans le document EP2275883, dans lequel une tige de mouvement est liée mécaniquement à une tige de boîtier via un joint de transmission. Les solutions décrites précédemment peuvent aussi être utilisées pour lier deux mobiles prenant part à l'habillage d'une montre, notamment d'une montre-bracelet, et peuvent être utilisées pour relier un arbre avec un rehaut ou avec une lunette tournante ou avec tout autre arbre.

Différents modes de réalisation et différentes variantes du joint de transmission, comprennent des glissières. Chaque glissière comprend un élément de glissière en creux et un élément de glissière saillant. Des flancs de l'élément en creux et des flancs de l'élément de glissière saillant coopèrent par contact pour assurer le guidage défini par la glissière. Si deux pièces sont reliées l'une à l'autre ou sont guidées l'une par rapport à l'autre par une liaison glissière, l'élément en creux et l'élément saillant peuvent se trouer indifféremment sur l'une ou l'autre des deux pièces à condition qu'un élément saillant se trouve sur l'une des pièces et que l'élément en creux coopérant avec cet élément saillant se trouve sur l'autre des pièces. Un élément en creux comprend avantageusement une ou plusieurs rainures. Un élément saillant comprend avantageusement une ou plusieurs formes parallélépipédiques ou plusieurs plots ou plusieurs pions. De manière avantageuse, un système de rappel élastique est associé à chaque glissière de sorte à limiter ou à annuler le jeu entre l'élément saillant et l'élément en creux de la glissière.

Avantageusement, le système de rappel élastique peut se présenter tel que l'élément saillant présente une dimension supérieure à une dimension de l'élément en creux de sorte que l'élément saillant et/ou l'élément en creux est élastiquement déformé lorsque l'élément saillant est introduit dans l'élément en creux. Cette déformation implique de préférence des contacts multiples entre des flancs de l'élément saillant et des flancs de l'élément en creux. Le système de rappel élastique comprend de préférence une ou plusieurs lames élastiques ou languettes élastiques. Ces lames ou languettes peuvent constituer directement des flancs ou portions de flancs d'un élément en creux ou constituer directement des flancs ou portions de flancs d'un élément saillant. Alternativement ou complémentairement, les lames ou languettes peuvent constituer des supports des flancs ou portions de flancs d'un élément en creux ou constituer des supports des flancs ou portions de flancs d'un élément saillant.

Dans les deux premiers modes de réalisation et dans les différentes variantes de joint de transmission, le joint de transmission peut présenter :
- un premier système de rappel élastique sur l'organe de liaison au niveau d'une première glissière ; et/ou
- un deuxième système de rappel élastique sur l'organe de liaison au niveau d'une deuxième glissière ; et/ou
- un troisième système de rappel élastique sur le premier arbre au niveau de la première glissière ; et/ou
- un quatrième système de rappel élastique sur le deuxième arbre au niveau de la deuxième glissière.

Chacun de ces systèmes de rappel peut comprendre une butée de limitation de la déformation du système de rappel élastique.

La réduction, voire l'annulation du jeu entre l'au moins une première partie de premier arbre et l'au moins une deuxième partie de deuxième arbre, ou entre les premier et deuxième mobiles, est un élément important contribuant au caractère homocinétique du joint de transmission. En effet, on évite ainsi des phases de rattrapage de jeu non homocinétiques où l'au moins une première partie de premier arbre tourne alors que l'au moins une deuxième partie de deuxième arbre reste immobile.

Dans les différents modes de réalisation et dans les différentes variantes de mécanisme horloger comprenant un joint de transmission, le mécanisme peut comprendre au moins un élément de friction 301, 302 (comme représenté sur la figure 21 relative au deuxième mode de réalisation). L'au moins un élément de friction peut être un clinquant 301 disposé au contact d'un arbre ou, de manière plus générale, à tout élément prenant part au mobile auquel l'arbre est associé ou prend part. Le mécanisme peut aussi comprendre un premier clinquant 302 disposé au contact du premier arbre 21 et un deuxième clinquant 301 disposé au contact du deuxième arbre 31. Un tel élément de friction peut se substituer au premier système de rappel élastique sur l'organe de liaison au niveau d'une première glissière ou au deuxième système de rappel élastique sur l'organe de liaison au niveau d'une deuxième glissière ou au troisième système de rappel élastique sur le premier arbre au niveau de la première glissière ou au quatrième système de rappel élastique sur le deuxième arbre au niveau de la deuxième glissière.

Dans les différents modes de réalisation et dans les différentes variantes, l'au moins un premier système de rappel permet de rappeler le deuxième mobile dans une unique position dépendante de la position dans laquelle se trouve le premier mobile. Ainsi, le premier système de rappel permet d'associer à toute position du premier mobile, une unique position du deuxième mobile. Cette fonction peut être assurée par le premier système de rappel. Dans certains modes de réalisation, cette fonction peut être assurée conjointement par le premier système de rappel et par le deuxième système de rappel.

Par « mobile », nous entendons, de préférence, dans tout ce document, une roue ou un pignon ou un assemblage de roues et/ou de pignons, ou un organe d'affichage ou un assemblage de roues et/ou de pignons et/ou d'organes d'affichage. Un « mobile » comporte un arbre qui peut être venu de fabrication de l'un ou l'autre des éléments précités ou constituer un composant à part entière.

Par « joint de transmission », nous entendons, de préférence, dans tout ce document, un dispositif de transmission permettant de :
- Lier en rotation deux arbres bout à bout ou sensiblement bout à bout ; et/ou
- Lier en rotation deux arbres parallèles ou sensiblement parallèles ; et/ou
- Transmettre un mouvement de rotation homocinétique ou sensiblement homocinétique entre deux arbres ; et/ou
- Transmettre un mouvement de rotation sans multiplication ou démultiplication de vitesse entre deux arbres ; et/ou
- Transmettre un mouvement de rotation entre deux arbres, les arbres tournant dans le même sens.

Le terme « joint de transmission » exclut un assemblage rigide entre deux arbres alignés, notamment un manchon rigide ou un manchon à cannelures reliant rigidement deux arbres alignés. Le terme « joint de transmission » exclut également une transmission à roues dentées. Le joint de transmission permet la transmission d'un mouvement de rotation d'un premier arbre à un deuxième arbre, le deuxième arbre étant désaxé relativement au premier. Toutefois, le joint de transmission permet également la transmission d'un mouvement de rotation d'un premier arbre à un deuxième arbre, le premier arbre et le deuxième arbre étant coaxiaux.

Par « châssis », nous entendons, de préférence, dans tout ce document, toute portion d'organe de liaison qui permet de relier mécaniquement en liaison complète :
- deux éléments de glissière de deux glissières différentes, et/ou
- deux systèmes de rappel élastique, et/ou
- deux éléments d'un système de rappel élastique.

Ainsi, le châssis est avantageusement une pièce structurant l'organe de liaison. Par exemple, le châssis a globalement une forme de disque ou d'anneau circulaire.

Par « au moins une partie d'arbre », nous entendons, de préférence, dans tout ce document, toute partie d'un arbre, même si cette partie est rapportée sur le reste de l'arbre et en est démontable ultérieurement, en supposant toutefois que dans un fonctionnement normal de service de l'arbre, la partie est en liaison complète avec le reste de l'arbre.

## Revendications

1. Mécanisme horloger (200) comprenant un organe (10) de liaison mécanique pour joint horloger de transmission (100) pour montre, l'organe de liaison mécanique étant destiné à lier mécaniquement un premier arbre (21) à un deuxième arbre (31), l'organe de liaison mécanique comprenant un premier élément de glissière (11) d'une première glissière, notamment selon un premier axe (D1), et un deuxième élément de glissière (12) d'une deuxième glissière, notamment selon un deuxième axe (D2), les premier et deuxième éléments de glissière étant destinés à coopérer avec au moins une première partie (2A) de premier arbre et au moins une deuxième partie (3A) de deuxième arbre, **caractérisé en ce que** le premier élément de glissière et le deuxième élément de glissière s'étendent, selon un troisième axe (D3) perpendiculaire ou sensiblement perpendiculaire audit premier axe et audit deuxième axe (D2) ou selon un troisième axe (D3) parallèle ou sensiblement parallèle aux axes (A2), (A3) des premier et deuxième arbres, sur des portions axiales (z1, z2) se chevauchant.

2. Mécanisme horloger (200) selon la revendication précédente, **caractérisé en ce que** le premier élément de glissière comprend une rainure (11) ou plusieurs rainures et/ou **en ce que** le deuxième élément de glissière comprend une rainure (12) ou plusieurs rainures (12a, 12b) et/ou **en ce que** le premier élément de glissière comprend au moins une surface (13) de friction et/ou **en ce que** le deuxième élément de glissière comprend au moins une surface (14) de friction.

3. Mécanisme horloger (200) selon l'une des revendications précédentes, **caractérisé en ce que** l'organe (10) de liaison mécanique comprend au moins un premier système (15, 16 ; 18 ; 16a'-16d' ; 111a, 111b ; 221, 222, 223, 224) de rappel élastique agencé de sorte à limiter ou à annuler le jeu entre l'au moins une première partie (2A) de premier arbre et l'au moins une deuxième partie (3A) de deuxième arbre, l'au moins un premier système de rappel reliant mécaniquement l'au moins une première partie (2A) de premier arbre et l'au moins une deuxième partie (3A) de deuxième arbre.

4. Mécanisme horloger (200) selon la revendication précédente, **caractérisé en ce que** l'organe (10) de liaison mécanique comprend un deuxième système (15, 16 ; 18 ; 16a'-16d' ; 112a, 112b ; 221, 222, 223, 224) de rappel élastique agencé de sorte à limiter ou à annuler le jeu entre l'au moins une première partie (2A) de premier arbre et l'au moins une deuxième partie (3A) de deuxième arbre, le deuxième système de rappel reliant mécaniquement l'au moins une première partie (2A) de premier arbre et l'au moins une deuxième partie (3A) de deuxième arbre.

5. Mécanisme horloger (200) selon la revendication 3 ou 4, **caractérisé en ce que** l'organe (10) de liaison mécanique comprend un châssis (15a, 16a ; 17 ; 115, 117 ; 210) sur lequel est fixé l'au moins un premier système de rappel élastique et/ou le deuxième système de rappel élastique.

6. Mécanisme horloger (200) selon l'une des revendications 3 à 5, **caractérisé en ce que** le premier système de rappel élastique comprend une ou plusieurs premières lames élastiques (18 ; 16a'-16d') et/ou le deuxième système de rappel élastique comprend une ou plusieurs deuxièmes lames élastiques (18 ; 16a'-16d').

7. Mécanisme horloger (200) selon l'une des revendications 3 à 6, **caractérisé en ce que** le premier système de rappel élastique comprend au moins une première butée (19) de limitation de la déformation du premier système de rappel élastique et/ou le deuxième système de rappel élastique comprend au moins une deuxième butée (19) de limitation de la déformation du deuxième système de rappel élastique.

8. Mécanisme horloger (200) selon l'une des revendications précédentes, **caractérisé en ce que** le mécanisme horloger (200) comprend un joint horloger de transmission (100) pour montre, notamment joint de transmission homocinétique, pour la liaison mécanique d'au moins une première partie (2A) de premier arbre au moins mobile en rotation selon un quatrième axe (A2) à au moins une deuxième partie (3A) de deuxième arbre au moins mobile en rotation selon un cinquième axe (A3), les quatrième et cinquième axes étant parallèles ou sensiblement parallèles, le joint comprenant :
- l'au moins une première partie (2A) de premier arbre (21), et
- l'au moins une deuxième partie (3A) de deuxième arbre (31), ,
le mécanisme horloger (200) comprenant en outre :
- un rouage d'une chaîne de transmission (1100), et
- un organe d'affichage (6),
le premier arbre, notamment l'au moins une première partie (2A) de premier arbre, étant en prise avec le rouage d'une chaîne de transmission et le deuxième arbre, notamment l'au moins une deuxième partie (3A) de deuxième arbre, étant en prise avec l'organe d'affichage.

9. Mécanisme horloger (200) selon la revendication 8, **caractérisé en ce que** le joint de transmission, notamment l'au moins une première partie (2A) de premier arbre, comprend au moins un troisième système (21a, 21b) de rappel élastique agencé de sorte à limiter ou à annuler le jeu entre l'au moins une première partie (2A) de premier arbre et l'organe de liaison, l'au moins un troisième système de rappel reliant mécaniquement l'au moins une première partie (2A) de premier arbre et l'organe de liaison et/ou **en ce que** le joint de transmission, notamment l'au moins une deuxième partie (3A) de deuxième arbre, comprend un quatrième système (32a, 32b) de rappel élastique agencé de sorte à limiter ou à annuler le jeu entre l'au moins une deuxième partie (3A) de deuxième arbre et l'organe de liaison, l'au moins un premier système de rappel reliant mécaniquement l'au moins une deuxième partie (3A) de deuxième arbre et l'organe de liaison.

10. Mécanisme horloger (200) selon l'une des revendications 8 et 9, **caractérisé en ce que** l'au moins une première partie (2A) de premier arbre comprend un deuxième élément (22 ; 22a, 22b) de glissière de la première glissière ou de la deuxième glissière, notamment un deuxième élément saillant de forme rectangulaire ou sensiblement rectangulaire ou en forme de pions, et/ou **en ce que** l'au moins une deuxième partie (3A) de deuxième arbre comprend un deuxième élément (32 ; 32a, 32b) de glissière de la première glissière ou de la deuxième glissière, notamment un deuxième élément saillant de forme rectangulaire ou sensiblement rectangulaire ou en forme de pions.

11. Mécanisme horloger (200) selon l'une des revendications précédentes, **caractérisé en ce qu'**il comprend un premier mobile (2) incluant le premier arbre (21), un deuxième mobile (3) incluant le deuxième arbre (31) et au moins un élément de friction (301, 302), notamment au moins un clinquant de friction, agencé de sorte à agir sur le premier mobile (2) et/ou sur le deuxième mobile (3), notamment agencé de sorte à agir sur le premier arbre et/ou sur le deuxième arbre.

12. Mouvement horloger (300) comprenant un mécanisme selon l'une des revendications précédentes.

13. Pièce d'horlogerie (400), notamment montre bracelet, comprenant un mouvement selon la revendication précédente ou un mécanisme selon l'une des revendications 1 à 11.

## Patentansprüche

1. Uhrmechanismus (200), umfassend ein mechanisches Verbindungselement (10) für eine Uhrenantriebskupplung (100) für eine Kleinuhr, wobei das mechanische Verbindungselement dazu bestimmt ist, eine erste Welle (21) mechanisch mit einer zweiten Welle (31) zu verbinden, wobei das mechanische Verbindungselement ein erstes Gleitführungselement (11) einer ersten Gleitführung, insbesondere entlang einer ersten Achse (D1), und ein zweites Gleitführungselement (12) einer zweiten Gleitführung, insbesondere entlang einer zweiten Achse (D2), umfasst, wobei das erste und das zweite Gleitführungselement dazu bestimmt sind, mit mindestens einem ersten Teil (2A) der ersten Welle und mindestens einem zweiten Teil (3A) der zweiten Welle zusammenzuwirken, **dadurch gekennzeichnet, dass** sich das erste Gleitführungselement und das zweite Gleitführungselement entlang einer dritten Achse (D3), die senkrecht oder im Wesentlichen senkrecht zu der ersten Achse (D1) und zu der zweiten Achse (D2) verläuft, oder entlang einer dritten Achse (D3), die parallel oder im Wesentlichen parallel zu den Achsen (A2), (A3) der ersten und der zweiten Welle verläuft, auf sich überlappenden axialen Abschnitten (z1, z2) erstrecken.

2. Uhrmechanismus (200) nach dem vorhergehenden Anspruch, **dadurch gekennzeichnet, dass** das erste Gleitführungselement eine Nut (11) oder mehrere Nuten umfasst und/oder dass das zweite Gleitführungselement eine Nut (12) oder mehrere Nuten (12a, 12b) umfasst und/oder dass das erste Gleitführungselement mindestens eine Reibungsfläche (13) umfasst und/oder dass das zweite Gleitführungselement mindestens eine Reibungsfläche (14) umfasst.

3. Uhrmechanismus (200) nach einem der vorhergehenden Ansprüche, **dadurch gekennzeichnet, dass** das mechanische Verbindungselement (10) mindestens ein erstes elastisches Rückstellsystem (15, 16; 18; 16a'-16d'; 111a, 111b; 221, 222, 223, 224) umfasst, das so angeordnet ist, dass es das Spiel zwischen dem mindestens einen ersten Teil (2A) der ersten Welle und dem mindestens einen zweiten Teil (3A) der zweiten Welle begrenzt oder eliminiert, wobei das mindestens eine erste elastische Rückstellsystem den mindestens einen ersten Teil (2A) der ersten Welle und den mindestens einen zweiten Teil (3A) der zweiten Welle mechanisch verbindet.

4. Uhrmechanismus (200) nach dem vorhergehenden Anspruch, **dadurch gekennzeichnet, dass** das mechanische Verbindungselement (10) ein zweites elastisches Rückstellsystem (15, 16; 18; 16a'-16d'; 112a, 112b; 221, 222, 223, 224) umfasst, das so angeordnet ist, dass es das Spiel zwischen dem mindestens einen ersten Teil (2A) der ersten Welle und dem mindestens einen zweiten Teil (3A) der zweiten Welle begrenzt oder eliminiert, wobei das zweite elastische Rückstellsystem den mindestens einen ersten Teil (2A) der ersten Welle und den mindestens einen zweiten Teil (3A) der zweiten Welle mechanisch verbindet.

5. Uhrmechanismus (200) nach Anspruch 3 oder 4, **dadurch gekennzeichnet, dass** das mechanische Verbindungselement (10) ein Chassis (15a, 16a; 17; 115, 117; 210) umfasst, an dem das mindestens eine erste elastische Rückstellsystem und/oder das zweite elastische Rückstellsystem befestigt ist.

6. Uhrmechanismus (200) nach einem der Ansprüche 3 bis 5, **dadurch gekennzeichnet, dass** das erste elastische Rückstellsystem eine oder mehrere erste elastische Zungen (18; 16a'-16d') umfasst und/oder das zweite elastische Rückstellsystem eine oder mehrere zweite elastische Zungen (18; 16a'-16d') umfasst.

7. Uhrmechanismus (200) nach einem der Ansprüche 3 bis 6, **dadurch gekennzeichnet, dass** das erste elastische Rückstellsystem mindestens einen ersten Anschlag (19) zur Begrenzung der Verformung des ersten elastischen Rückstellsystems umfasst und/oder das zweite elastische Rückstellsystem mindestens einen zweiten Anschlag (19) zur Begrenzung der Verformung des zweiten elastischen Rückstellsystems umfasst.

8. Uhrmechanismus (200) nach einem der vorhergehenden Ansprüche, **dadurch gekennzeichnet, dass** der Uhrmechanismus (200) eine Uhrenantriebskupplung (100) für eine Kleinuhr, insbesondere eine homokinetische Antriebskupplung, zur mechanischen Verbindung mindestens eines ersten Teils (2A) der ersten Welle, die mindestens entlang einer vierten Achse (A2) drehbeweglich ist, mit mindestens einem zweiten Teil (3A) der zweiten Welle, die mindestens entlang einer fünften Achse (A3) drehbeweglich ist, umfasst, wobei die vierte und die fünfte Achse parallel oder im Wesentlichen parallel sind, wobei die Kupplung Folgendes umfasst:
- den mindestens einen ersten Teil (2A) der ersten Welle (21), und
- den mindestens einen zweiten Teil (3A) der zweiten Welle (31),
wobei der Uhrmechanismus (200) ferner umfasst:
- ein Räderwerk einer Antriebskette (1100), und
- ein Anzeigeorgan (6),
wobei die erste Welle, insbesondere der mindestens eine erste Teil (2A) der ersten Welle, mit dem Räderwerk der Antriebskette in Eingriff steht und wobei die zweite Welle, insbesondere der mindestens eine zweite Teil (3A) der zweiten Welle, mit dem Anzeigeorgan in Eingriff steht.

9. Uhrmechanismus (200) nach Anspruch 8, **dadurch gekennzeichnet, dass** die Antriebskupplung, insbesondere der mindestens eine erste Teil (2A) der ersten Welle, mindestens ein drittes elastisches Rückstellsystem (21a, 21b) umfasst, das so angeordnet ist, dass es das Spiel zwischen dem mindestens einen ersten Teil (2A) der ersten Welle und dem Verbindungselement begrenzt oder eliminiert, wobei das mindestens eine dritte elastische Rückstellsystem den mindestens einen ersten Teil (2A) der ersten Welle und das Verbindungselement mechanisch verbindet, und/oder dass die Antriebskupplung, insbesondere der mindestens eine zweite Teil (3A) der zweiten Welle, ein viertes elastisches Rückstellsystem (32a, 32b) umfasst, das so angeordnet ist, dass es das Spiel zwischen dem mindestens einen zweiten Teil (3A) der zweiten Welle und dem Verbindungselement begrenzt oder eliminiert, wobei das mindestens eine erste Rückstellsystem den mindestens einen zweiten Teil (3A) der zweiten Welle und das Verbindungselement mechanisch verbindet.

10. Uhrmechanismus (200) nach einem der Ansprüche 8 und 9, **dadurch gekennzeichnet, dass** der mindestens eine erste Teil (2A) der ersten Welle ein zweites Gleitführungselement (22; 22a, 22b) der ersten Gleitführung oder der zweiten Gleitführung umfasst, insbesondere ein vorstehendes zweites Element von rechteckiger oder im Wesentlichen rechteckiger Form oder in Form von Stiften, und/oder dass der mindestens eine zweite Teil (3A) der zweiten Welle ein zweites Gleitführungselement (32; 32a, 32b) der ersten Gleitführung oder der zweiten Gleitführung umfasst, insbesondere ein vorstehendes zweites Element von rechteckiger oder im Wesentlichen rechteckiger Form oder in Form von Stiften.

11. Uhrmechanismus (200) nach einem der vorhergehenden Ansprüche, **dadurch gekennzeichnet, dass** er einen ersten Drehteil (2), der die erste Welle (21) beinhaltet, einen zweiten Drehteil (3), der die zweite Welle (31) beinhaltet, und mindestens ein Reibelement (301, 302), insbesondere mindestens einen Reibungsflitter, umfasst, der so angeordnet ist, dass er auf den ersten Drehteil (2) und/oder auf den zweiten Drehteil (3) einwirkt, insbesondere so angeordnet ist, dass er auf die erste Welle und/oder auf die zweite Welle einwirkt.

12. Uhrwerk (300), umfassend einen Mechanismus nach einem der vorhergehenden Ansprüche.

13. Zeitmessgerät (400), insbesondere Armbanduhr, umfassend ein Uhrwerk nach dem vorhergehenden Anspruch oder einen Mechanismus nach einem der Ansprüche 1 bis 11.

## Claims

1. Clock mechanism (200) comprising a mechanical linkage element (10) for a timepiece transmission coupling (100) for a watch, the mechanical linkage element being designed to mechanically link a first shaft (21) to a second shaft (31), the mechanical linkage element comprising a first sliding element (11) of a first slideway, notably along a first axis (D1), and a second sliding element (12) of a second slideway, notably along a second axis (D2), the first and second sliding elements being designed to cooperate with at least one first part (2A) of the first shaft and at least one second part (3A) of the second shaft, **characterized in that** the first sliding element and the second sliding element extend, along a third axis (D3) perpendicular or substantially perpendicular to said first axis (D1) and to said second axis (D2) or along a third axis (D3) parallel or substantially parallel to the axes (A2), (A3) of the first and second shafts, overlapping on axial portions (z1, z2).

2. Clock mechanism (200) according to the preceding claim, **characterized in that** the first sliding element comprises a groove (11) or several grooves, and/or **in that** the second sliding element comprises a groove (12) or several grooves (12a, 12b), and/or **in that** the first sliding element comprises at least one friction surface (13), and/or **in that** the second sliding element comprises at least one friction surface (14).

3. Clock mechanism (200) according to one of the preceding claims, **characterized in that** the mechanical linkage element (10) comprises at least a first elastic return system (15, 16; 18; 16a'-16d'; 111a, 111b; 221, 222, 223, 224) arranged so as to limit or cancel out the play between the at least one first part (2A) of the first shaft and the at least one second part (3A) of the second shaft, the at least one first return system mechanically connecting the at least one first part (2A) of the first shaft and the at least one second part (3A) of the second shaft.

4. Clock mechanism (200) according to the preceding claim, **characterized in that** the mechanical linkage element (10) comprises a second elastic return system (15, 16; 18; 16a'-16d'; 112a, 112b; 221, 222, 223, 224) arranged so as to limit or cancel out the play between the at least one first part (2A) of the first shaft and the at least one second part (3A) of the second shaft, the second return system mechanically connecting the at least one first part (2A) of the first shaft and the at least one second part (3A) of the second shaft.

5. Clock mechanism (200) according to Claim 3 or 4, **characterized in that** the mechanical linkage element (10) comprises a frame (15a, 16a; 17; 115, 117; 210) on which is fastened the at least one first elastic return system and/or the second elastic return system.

6. Clock mechanism (200) according to one of Claims 3 to 5, **characterized in that** the first elastic return system comprises one or more first elastic blades (18; 16a'-16d') and/or the second elastic return system comprises one or more second elastic blades (18; 16a'-16d').

7. Clock mechanism (200) according to one of Claims 3 to 6, **characterized in that** the first elastic return system comprises at least a first abutment (19) to limit the deformation of the first elastic return system and/or the second elastic return system comprises at least a second abutment (19) to limit the deformation of the second elastic return system.

8. Clock mechanism (200) according to one of the preceding claims, **characterized in that** the clock mechanism (200) comprises a timepiece transmission coupling (100) for a watch, notably a homokinetic transmission coupling, for the mechanical linkage of at least one first part (2A) of the first shaft at least movable in rotation about a fourth axis (A2) to at least one second part (3A) of the second shaft at least movable in rotation about a fifth axis (A3), the fourth and fifth axes being parallel or substantially parallel, the coupling comprising:
- the at least one first part (2A) of the first shaft (21), and
- the at least one second part (3A) of the second shaft (31),
the timepiece mechanism (200) further comprising:
- a gear train of a transmission chain (1100), and
- a display element (6),
the first shaft, notably the at least one first part (2A) of the first shaft, being in engagement with the gear train of a transmission chain and the second shaft, notably the at least one second part (3A) of the second shaft, being in engagement with the display element.

9. Clock mechanism (200) according to Claim 8, **characterized in that** the transmission coupling, notably the at least one first part (2A) of the first shaft, comprises at least a third elastic return system (21a, 21b) arranged so as to limit or cancel out the play between the at least one first part (2A) of the first shaft and the linkage element, the at least one third return system mechanically connecting the at least one first part (2A) of the first shaft and the linkage element and/or **in that** the transmission coupling, notably the at least one second part (3A) of the second shaft, comprises a fourth elastic return system (32a, 32b) arranged so as to limit or cancel out the play between the at least one second part (3A) of the second shaft and the linkage element, the at least one first return system mechanically connecting the at least one second part (3A) of the second shaft and the linkage element.

10. Clock mechanism (200) according to one of Claims 8 and 9, **characterized in that** the at least one first part (2A) of the first shaft comprises a second sliding element (22; 22a, 22b) of the first slideway or of the second slideway, notably a second projecting element of rectangular or substantially rectangular shape or in the form of pegs, and/or **in that** the at least one second part (3A) of the second shaft comprises a second sliding element (32; 32a, 32b) of the first slideway or of the second slideway, notably a second projecting element of rectangular or substantially rectangular shape or in the form of pegs.

11. Clock mechanism (200) according to one of the preceding claims, **characterized in that** it comprises a first mobile (2) including the first shaft (21), a second mobile (3) including the second shaft (31) and at least one friction element (301, 302), notably at least one friction shim, arranged so as to act on the first mobile (2) and/or on the second mobile (3), notably arranged so as to act on the first shaft and/or on the second shaft.

12. Timepiece movement (300) comprising a mechanism according to one of the preceding claims.

13. Timepiece (400), notably a wristwatch, comprising a movement according to the preceding claim or a mechanism according to one of Claims 1 to 11.
